# EUROPEAN PATENT SPECIFICATION

(11) **EP 2 818 393 B1**
(45) Date of publication and mention of the grant of the patent: **29.03.2017**
(21) Application number: 12869005.4
(22) Date of filing: 22.02.2012
(51) Int. Cl.: B62M 6/65

(54) **ELECTRIC HUB DEVICE AND ELECTRIC BICYCLE**
ELEKTRISCHE NABENVORRICHTUNG UND ELEKTROFAHRRAD
DISPOSITIF DE MOYEU ÉLECTRIQUE ET VÉLO ÉLECTRIQUE

(43) Date of publication of application: 31.12.2014
(73) Proprietor: Panasonic Corporation, Kadoma-shi, Osaka 571-8501 (JP)
(72) Inventor: TSURUOKA, Kouichirou, Chuo-ku, Osaka 540-6207 (JP)
(74) Representative: Grünecker Patent- und Rechtsanwälte PartG mbB
(86) International application number: PCT/JP2012/001178
(87) International publication number: WO 2013/124892

(56) References cited:
- EP-A1- 0 528 235
- EP-A2- 1 640 261
- WO-A1-2007/083995
- WO-A1-2008/088169
- DE-A1- 19 805 679
- GB-A- 2 357 329
- JP-A- 2005 335 536
- JP-A- 2009 012 542
- JP-A- 2009 012 627
- JP-A- 2011 025 730
- US-A- 5 382 854

## Description

### Technical Field

The present invention relates to an electric hub device and an electric bicycle including the electric hub device.

### Background Art

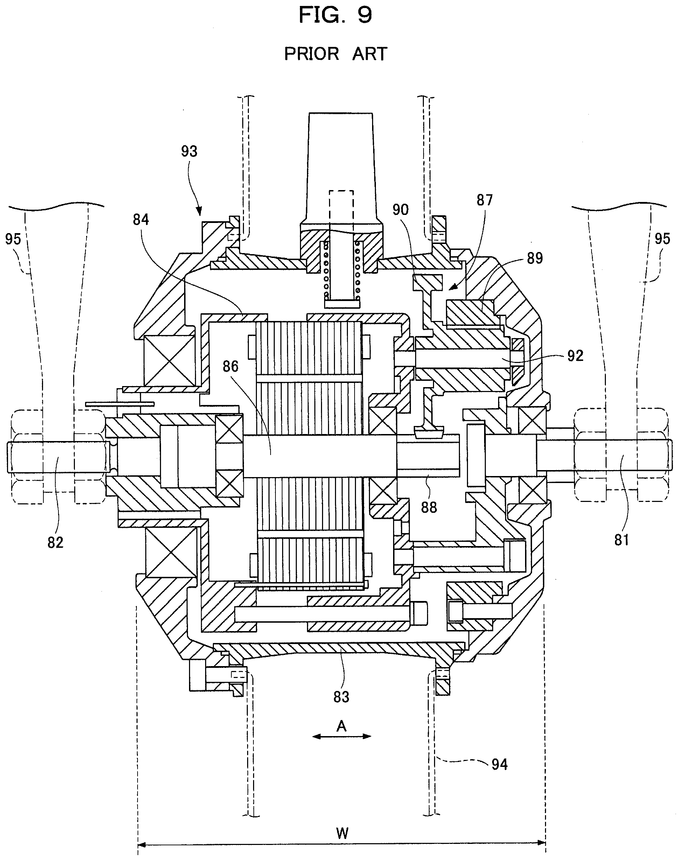

As shown in FIG. 9, a conventional electric hub device includes a pair of fixing hub shafts 81 and 82 provided in a lateral direction, a hub body 83 that is rotatable with respect to the hub shafts 81 and 82, and a motor 84 that rotates the hub body 83.

The motor 84 is provided in the hub body 83. A rotating shaft 86 of the motor 84 and the hub body 83 move in synchronization with each other via a speed reduction mechanism 87 provided in the hub body 83. The speed reduction mechanism 87 includes a sun gear 88 formed on the rotating shaft 86, an annular gear 89 provided in the hub body 83, and a plurality of planetary gears 90 that mesh with the sun gear 88 and the annular gear 89.

The speed reduction mechanism 87 is adjacent to the motor 84 in an axial direction A of the hub shafts 81 and 82.

An electric hub device 93 configured thus is provided on a front wheel 94 of an electric bicycle with the hub shafts 81 and 82 connected to the end of a front fork 95.

With this configuration, the motor 84 starts to rotate the rotating shaft 86. This rotates the sun gear 88, rotates each of the planetary gears 90 about a spindle 92, rotates the annular gear 89 in response to the rotations of the planetary gears 90, and decelerates the hub body 83 with the annular gear 89 in a combined manner so as to rotate the hub body 83 about the axes of the hub shafts 81 and 82. Thus, the front wheel 94 is rotated by the auxiliary power of the motor 84.

At this point, the rotation speed of the rotating shaft 86 of the motor 84 is reduced by the speed reduction mechanism 87 and then is transmitted to the hub body 83, causing the hub body 83 to have a lower rotation speed than the motor 84. However, the hub body 83 can be rotated with a larger rotary force than that of the rotating shaft 86 of the motor 84.

For example, the electric hub device 93 is described in Japanese published unexamined patent application of Patent Literature 1.

DE 198 05 679 A1 discloses an electric hub device which has the features of the preamble of claim 1.

### Citation List

### Patent Literatures

Patent Literature 1: Japanese Patent Laid-Open No. 2006-96059
Patent Literature 2: Japanese Patent Laid-Open No. 2009-12627

### Summary of Invention

### Technical Problem

As shown in FIG. 9, unfortunately, the hub body 83 containing the speed reduction mechanism 87 in the conventional configuration increases a width W of the hub body 83 in the axial direction A.

Another direct-drive electric hub device directly transmits the rotation of a motor to a hub body without the provision of the speed reduction mechanism 87. Such an electric hub device requires a high-power motor for rotating the hub body with a large rotary force. This disadvantageously increases the outside diameter of the motor and increases the outside diameter of the hub body, accordingly.

An object of the present invention is to provide an electric hub device and an electric bicycle which can reduce the size of a hub body.

### Solution to Problem

In order to attain the object, a first invention is an electric hub device including fixing hub shafts, a hub body rotatable with respect to the hub shafts, and a motor that rotates the hub body,
wherein the motor is provided in the hub body,
the motor includes a rotating body provided with a rotating shaft and a housing accommodating the rotating body,
the rotating shaft of the motor and the hub body move in synchronization with each other via a speed reduction mechanism provided in the hub body,
the speed reduction mechanism includes a sun gear formed on the rotating shaft, an annular gear provided in the hub body, and rotatable planetary gears that mesh with the sun gear and the annular gear,
the housing has a recess that is dented inward in the axial direction of the hub shaft, and
the sun gear, the annular gear, and the planetary gears are placed in the recess.

With this configuration, the motor starts to rotate the rotating shaft. This rotates the sun gear, the planetary gears, and the annular gear, transmits the rotation of the annular gear to the hub body, and rotates the hub body about the axis of the hub shaft with a reduced speed.

At this point, the rotation speed of the rotating shaft of the motor is reduced by the speed reduction mechanism and then is transmitted to the hub body. Thus, the hub body can be rotated using the small motor with a large rotary force. This can prevent an increase in the outside diameter of the mold motor, thereby suppressing an increase in the outside diameter of the hub body.

Furthermore, the sun gear, the annular gear, and the planetary gears are placed in the recess of the housing of the motor, thereby reducing the width of the hub body in the axial direction of the hub shaft.

The electric hub device according to the invention further includes a support member attached to the recess of the housing, and
the planetary gears are rotatably supported in the recess by the housing and the support member.

In the electric hub device according to the invention, wherein the annular gear is disposed outside the support member in a radial direction and is rotatably supported by the support member via a bearing.

With this configuration, the motor starts to rotate the rotating shaft. This rotates the sun gear and the planetary gears, rotates the annular gear supported by the support member via the bearing, transmits the rotation of the annular gear to the hub body, and rotates the hub body about the axis of the hub shaft with a reduced speed.

The annual gear is disposed outside the support member in the radial direction and is supported by the support member via the bearing. This reduces the total dimension of the support member and the annular gear in the axial direction of the hub shaft, reducing the width of the hub body, accordingly.

The electric hub device according to a second invention, wherein the rotating body includes an annular rotor and a rotor holder that supports the rotor, the housing accommodates a stator, and the recess of the housing is dented into the rotor.

With this configuration, the total dimension of the motor and the speed reduction mechanism is reduced in the axial direction of the hub shaft, reducing the width of the hub body, accordingly.

The electric hub device according to a third invention, wherein the sun gear, the planetary gears, and the annular gear are disposed on a straight line in the radial direction.

With this configuration, the width of the hub body is further reduced.

A fourth invention is an electric bicycle including the electric hub device according to any one of the first to third inventions,
the electric hub device being provided on a wheel.

The electric bicycle according to a fifth invention further includes a free wheel fit onto the hub shaft outside one side of the hub body,
the free wheel including a plurality of sprockets.

With this configuration, the width of the hub body can be reduced and thus the number of sprockets of the free wheel can be increased, achieving an electric bicycle having the function of satisfactorily changing speeds in multiple stages.

### Advantageous Effects of Invention

As has been discussed, the present invention can suppress an increase in the outside diameter of the hub body and reduce the width of the hub body in the axial direction, thereby reducing the size and weight of the hub body.

### Brief Description of Drawings

[FIG. 1] FIG. 1 is a side view of an electric bicycle including an electric hub device according to an embodiment of the present invention.
[FIG. 2] FIG. 2 is an enlarged side view of the electric hub device on the rear wheel of the electric bicycle.
[FIG. 3] FIG. 3 is a cross-sectional view of the electric hub device.
[FIG. 4] FIG. 4 is a partially enlarged cross-sectional view of the electric hub device.
[FIG. 5] FIG. 5 is a perspective view of a motor in the electric hub device.
[FIG. 6] FIG. 6 shows a speed reduction mechanism in the electric hub device in an axial direction.
[FIG. 7] FIG. 7 is a cross-sectional view showing an internal gear and a support member in the electric hub device.
[FIG. 8] FIG. 8 is an exploded perspective view of the internal gear and the support member in the electric hub device.
[FIG. 9] FIG. 9 is a cross-sectional view of a conventional electric hub device.

### Description of Embodiments

An embodiment of the present invention will be described below with reference to the accompanying drawings.

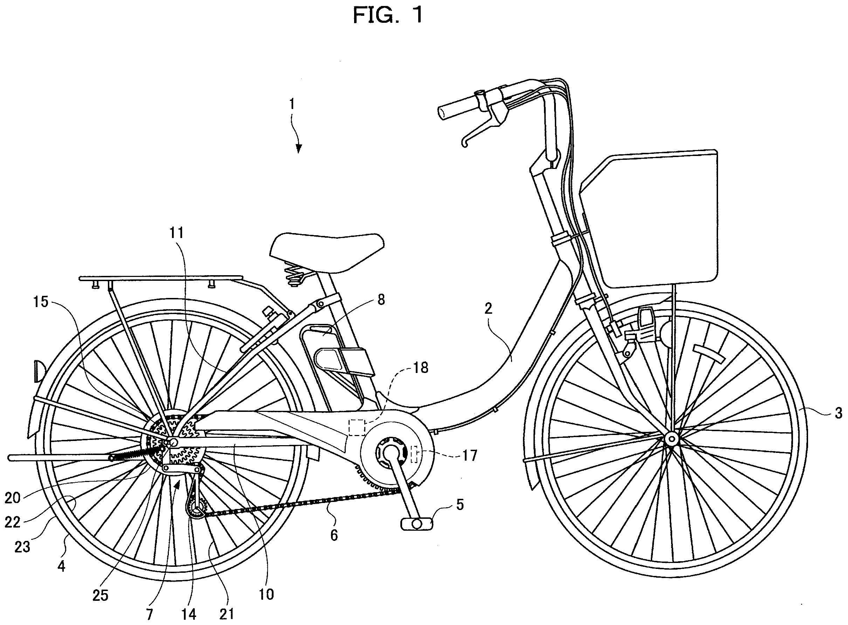

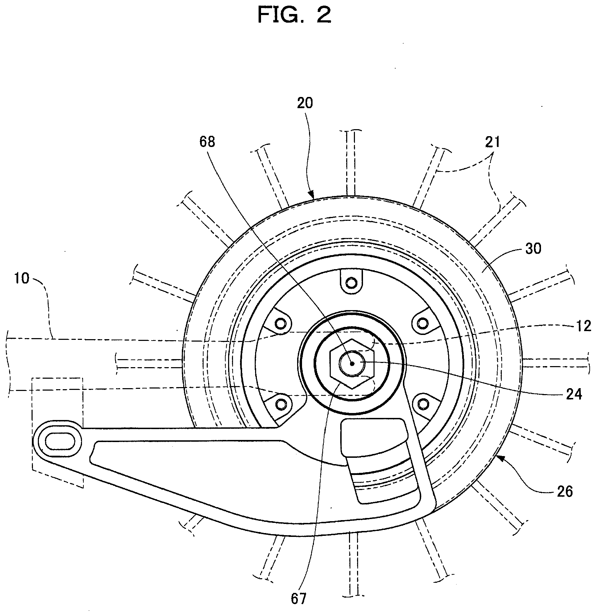

As shown in FIG. 1, reference numeral 1 denotes an electric bicycle which includes a frame 2, front and rear wheels 3 and 4 provided on the frame 2, pedals 5, a chain 6, and an external derailleur 7. The frame 2 includes chain stays 10 and a rear fork 11. Moreover, a rear claw 12 with a groove (see FIG. 2) is provided on the rear end of the chain stay 10. The external derailleur 7 includes a rear derailleur 14 and a multi-stage free wheel 15. The rear wheel 4 includes an electric hub device 20, a plurality of spokes 21, a rim 22, and a tire 23.

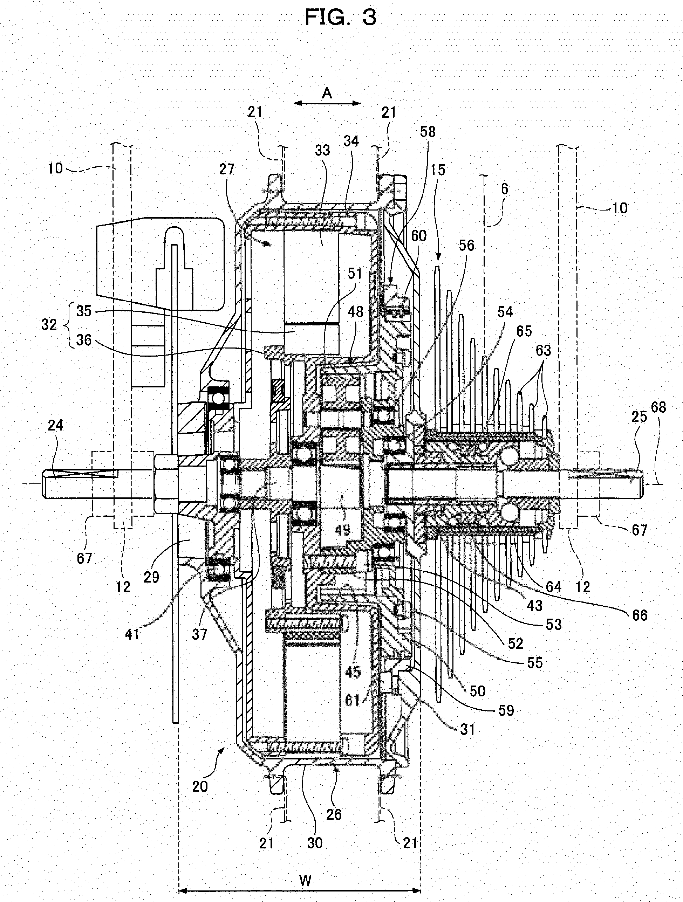

As shown in FIG. 3, the electric hub device 20 includes a pair of fixing hub shafts 24 and 25 provided in a lateral direction, a hub body 26 rotatable with respect to the hub shafts 24 and 25, and a mold motor 27 that rotates the hub body 26.

The hub body 26 includes a cylindrical body member 30 having an opening 29 on one end of the body member 30 in an axial direction A of the hub shafts 24 and 25, a disc-shaped cover member 31 that closes the other end of the body member 30, and a cylindrical sleeve 43 connected to the cover member 31. The periphery of the sleeve 43 has a hexagonal distal end and a circular proximal end.

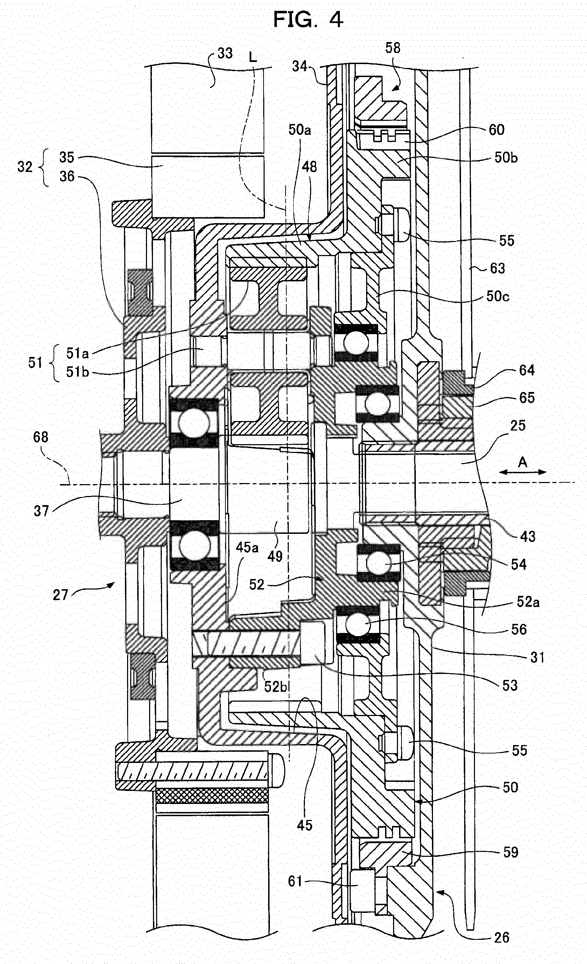

As shown in FIGS. 3 and 4, the mold motor 27 is disposed in the hub body 26. The mold motor 27 is a brushless motor including a rotating body 32, a stator 33, and a housing 34. The rotating body 32 includes a rotor 35 having an annular shape and a rotor holder 36 that supports the rotor 35. A rotating shaft 37 of the mold motor 27 penetrates the center of the rotor holder 36. The rotating shaft 37 is integrated with the rotor holder 36. The rotor 35, the rotor holder 36, and the rotating shaft 37 rotate in a combined manner.

The rotating body 32 and the stator 33 are stored in the housing 34. The stator 33 is an annular member that is disposed around the outer surface of the rotor 35 and is fixed in the housing 34. The rotating shaft 37 is disposed between the hub shafts 24 and 25 on the same axis as the hub shafts 24 and 25.

As shown in FIG. 3, the one end of the body member 30 of the hub body 26 is rotatably supported by the housing 34 via a bearing 41. The hub shaft 24 is fixed to the housing 34. The hub shaft 25 is inserted into the sleeve 43 from the outside of the hub body 26.

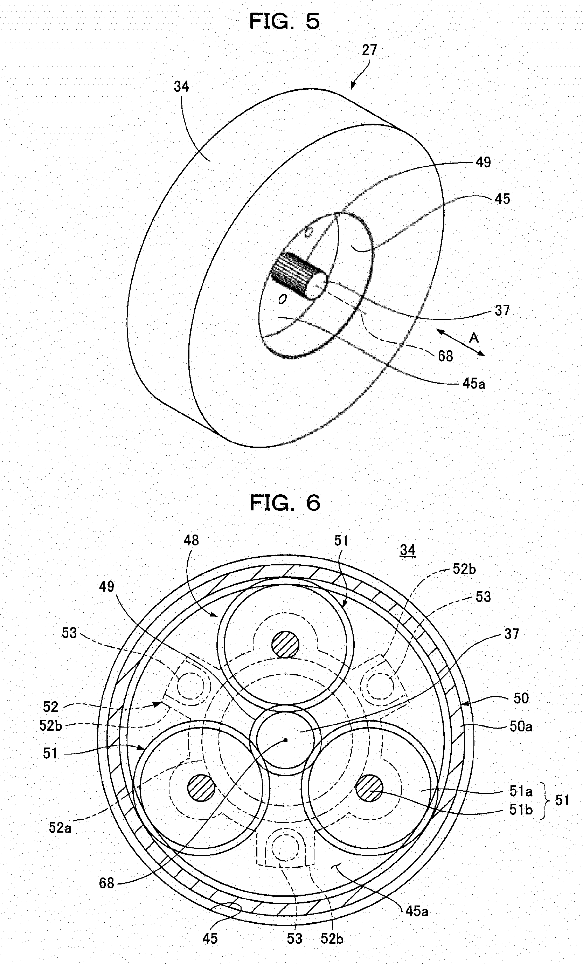

As shown in FIGS. 3 to 5, a recess 45 dented inward in the axial direction A of the hub shafts 24 and 25 is formed at the center of the housing 34. The recess 45 is circularly dented into the rotor 35 in the axial direction A. The outside diameter of the recess 45 is slightly smaller than the inside diameter of the rotor 35.

As shown in FIGS. 3, 4, and 6, the hub body 26 contains a speed reduction mechanism 48. The rotating shaft 37 of the mold motor 27 and the hub body 26 move in synchronization with each other via the speed reduction mechanism 48. The speed reduction mechanism 48 includes a sun gear 49 formed on the end of the rotating shaft 37, an annular internal gear 50 (an example of an annular gear), and a plurality of rotatable planetary gears 51 that mesh with the sun gear 49 and the internal gear 50.

The sun gear 49 is placed in the recess 45.

The planetary gears 51 are placed in the recess 45 and are rotatably supported by the housing 34 and a support member 52. Specifically, the planetary gear 51 includes a gear body 51a and a spindle 51b inserted into the gear body 51a. The gear body 51a is rotatably supported by the spindle 51b. One end of the spindle 51b is supported by a bottom 45a of the recess 45 while the other end of the spindle 51b is supported by the support member 52.

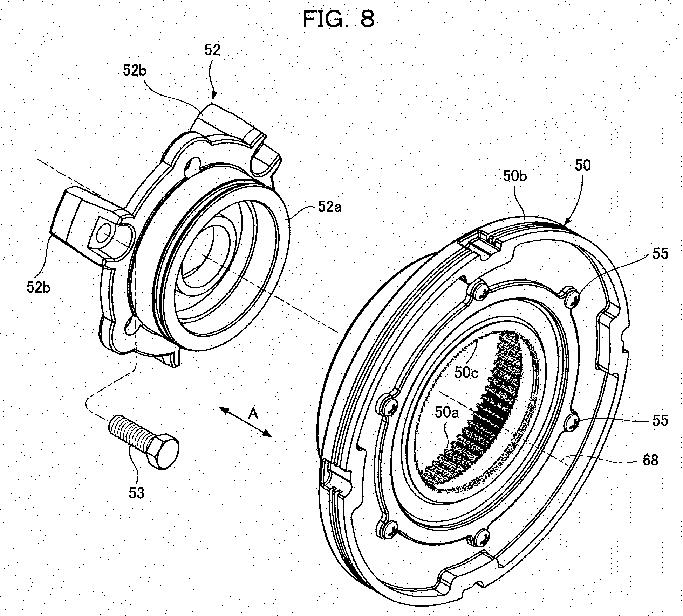

As shown in FIGS. 4, 7, and 8, the support member 52 has a cylindrical boss 52a and a plurality of legs 52b provided around the boss 52a. The support member 52 is connected and fixed to the bottom 45a of the recess 45 by a plurality of screws 53. Furthermore, a bearing 54 is provided between the inner surface of the boss 52a of the support member 52 and the cover member 31 of the hub body 26.

The planetary gear 51 rotates about the spindle 51b but does not revolve around the sun gear 49.

The internal gear 50 rotatable with respect to the axis of the hub shafts 24 and 25 is disposed outside of the support member 52 in a radial direction and is supported by the support member 52 via a bearing 56. The internal gear 50 includes a cylindrical body 50a having a plurality of teeth on the inner surface of the cylindrical body 50a, an annular external disc 50b that radially protrudes outward from one end of the cylindrical body 50a, and an annular internal disc 50c that radially protrudes inward from the one end of the cylindrical body 50a. The internal disc 50c is attached to the cylindrical body 50a by a plurality of screws 55.

The internal disc 50c is fit onto the boss 52a of the support member 52. The bearing 56 is interposed between the inner surface of the internal disc 50c and the outer surface of the boss 52a. As shown in FIG. 4, the cylindrical body 50a of the internal gear 50 is placed in the recess 45 of the housing 34 while the planetary gears 51 mesh with the sun gear 49 and the inner teeth of the cylindrical body 50a.

The sun gear 49, the planetary gears 51, and the cylindrical body 50a of the internal gear 50 are disposed on a straight line L extended in the radial direction.

As shown in FIGS. 3 and 4, the hub body 26 contains a first one-way clutch 58 that transmits the rotations of the internal gear 50 to the hub body 26 but does not transmit the rotations of the hub body 26 to the internal gear 50. The first one-way clutch 58 is a ratchet clutch that includes an annular ratchet gear 59 and a plurality of ratchet claws 60 removably engaged with the ratchet gear 59. The ratchet gear 59 is attached to the interior of the cover member 31 of the hub body 26 by a screw 61. The ratchet claws 60 are provided on the outer surface of the external disc 50b of the internal gear 50. If the internal gear 50 rotates in one direction relative to the cover member 31, the ratchet claws 60 are engaged with the ratchet gear 59. If the internal gear 50 rotates in the other direction relative to the cover member 31, the ratchet claws 60 are separated from the ratchet gear 59.

As shown in FIG. 3, the free wheel 15 is rotatably fit onto the hub shaft 25 outside one side of the hub body 26. The free wheel 15 includes a cylindrical outer body 64 having a plurality of sprockets 63, a cylindrical inner body 65 provided in the outer body 64, and a second one-way clutch 66 provided between the outer body 64 and the inner body 65. The second one-way clutch 66 has the function of transmitting the rotations of the sprockets 63 to the hub body 26 without transmitting the rotations of the hub body 26 to the sprockets 63.

The outer surface of the cylindrical inner body 65 is circular while the inner surface of the cylindrical inner body 65 is hexagonal. The inner body 65 is fit onto the end of the sleeve 43, that is, the hexagonal portion of the sleeve 43. Thus, the inner body 65 and the sleeve 43 are engaged with each other in a circumferential direction (rotation direction).

As shown in FIGS. 2 and 3, the outer periphery of the hub body 26 is connected to the ends of the spokes 21 of the rear wheel 4. The hub shafts 24 and 25 are inserted into the grooves of the rear claws 12 of the chain stays 10. Nuts 67 are screwed onto the hub shafts 24 and 25 so as to attach the rear wheel 4 between the chain stays 10 with the electric hub device 20.

As shown in FIG. 1, the electric bicycle 1 includes a battery 8 that supplies power to the mold motor 27, a detector 17 that detects a pedal force applied to the pedals 5, and a control unit 18 that controls driving of the mold motor 27 according to a pedal force detected by the detector 17.

The operations of the configuration will be described below.

When a user rides the electric bicycle 1, a pedal force applied to the pedals 5 is detected by the detector 17 and is transmitted to the free wheel 15 through the chain 6 so as to rotate the free wheel 15. At this point, as shown in FIG. 3, the outer body 64 and the inner body 65 are connected to each other via the second one-way clutch 66, the rotations of the free wheel 15 are transmitted from the outer body 64 to the inner body 65 through the second one-way clutch 66, and the inner body 65, the sleeve 43, the cover member 31, and the body member 30 are rotated in a combined manner. Thus, the hub body 26 rotates about an axis 68.

At this point, if a pedal force detected by the detector 17 is smaller than a threshold value, the control unit 18 stops the mold motor 27. In this case, the ratchet gear 59 of the first one-way clutch 58 rotates with the hub body 26 in a combined manner in one direction. The ratchet claws 60 separated from the ratchet gear 59 cause the first one-way clutch 58 to disconnect the hub body 26 and the internal gear 50. This can prevent the transmission of rotations of the hub body 26 to the mold motor 27 so as to keep the mold motor 27 in a stopped state and rotate the rear wheel 4 only by a pedal force applied to the pedals 7.

If a pedal force detected by the detector 17 is not smaller than the threshold value, the control unit 18 drives the mold motor 27. This rotates the rotor holder 36 and the rotating shaft 37 with the rotor 35, rotates the sun gear 49 of the rotating shaft 37, rotates the planetary gears 51, and rotates the internal gear 50 in response to the rotations of the planetary gears 51 while the internal gear 50 is supported by the support member 52 via the bearing 56.

At this point, the ratchet claws 60 are engaged with the ratchet gear 59 to connect the internal gear 50 and the hub body 26 via the first one-way clutch 58, thereby transmitting the rotations of the internal gear 50 to the hub body 26. Thus, the rear wheel 4 is rotated by a pedal force applied to the pedals 7 and a rotary force (auxiliary power) outputted from the mold motor 27 according to the pedal force.

At this point, the rotation speed of the rotating shaft 37 of the mold motor 27 is reduced by the speed reduction mechanism 48 and then is transmitted to the hub body 26. Thus, the hub body 26 can be rotated using the small mold motor 27 with a large rotary force. This can prevent an increase in the outside diameter of the mold motor 27, thereby suppressing an increase in the outside diameter of the hub body 26.

As shown in FIGS. 3 to 6, the sun gear 49, the planetary gears 51, and the cylindrical body 50a of the internal gear 50 are placed in the recess 45 of the housing 34. This can reduce a width W of the hub body 26 in the axial direction A.

Moreover, the recess 45 placed inside the rotor 35 reduces the total dimension of the mold motor 27 and the speed reduction mechanism 48 in the axial direction A, further reducing the width W of the hub body 26, accordingly.

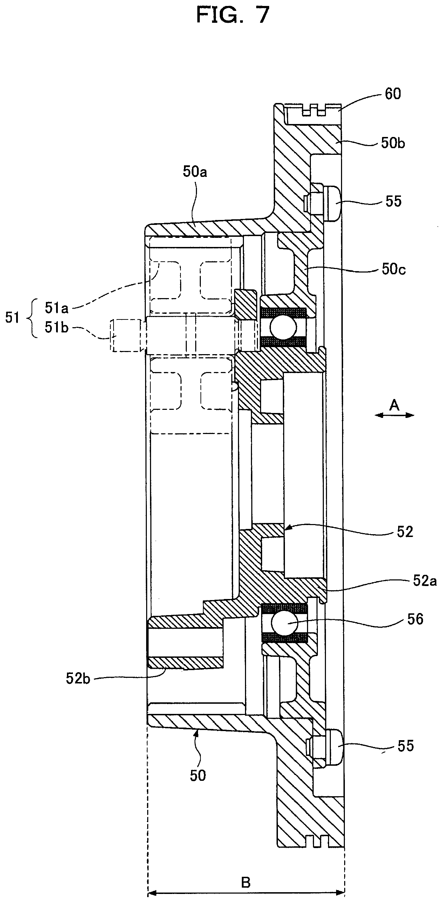

As shown in FIG. 7, the internal gear 50 is disposed outside the support member 52 in the radial direction and is supported by the support member 52 via the bearing 56. This reduces a total dimension B of the support member 52 and the internal gear 50 in the axial direction A, further reducing the width W of the hub body 26, accordingly.

As shown in FIG. 4, the sun gear 49, the planetary gears 51, and the cylindrical body 50a of the internal gear 50 are disposed on the straight line L in the radial direction, further reducing the width W of the hub body 26.

Since the width W of the hub body 26 can be reduced, the hub body 26 can be reduced in size and weight and the number of sprockets 63 of the free wheel 15 can be increased, achieving the electric bicycle 1 with the function of satisfactorily changing speeds in multiple stages.

If the pedals 5 are held in a coasting state on a downhill road, as shown in FIG. 3, the hub body 26 and the inner body 65 rotate with the rear wheel 4. At this point, the outer body 64 and the inner body 65 are disconnected from each other via the second one-way clutch 66 and thus the rotation of the inner body 65 is not transmitted to the outer body 64. This prevents the transmission of the rotation of the hub body 26 to the sprocket 63 of the free wheel 15 and thus does not rotate the chain 6 and the pedals 5.

In the embodiment, the electric hub device 20 on the rear wheel 4 may be provided on the front wheel 3 instead. In this case, the front wheel 3 is rotated by the mold motor 27.

In the embodiment, a brushless motor is used as an example of the motor 27. The motor 27 may be a motor other than a brushless motor. Alternatively, the mold motor 27 may be a different kind of motor.

In the embodiment, the first one-way clutch 58 may not be provided. In this case, the internal gear 50 is attached to the interior of the cover member 31 of the hub body 26. For example, when the electric bicycle 1 coasts on a downhill road, the rotation of the rear wheel 4 is transmitted to the rotating shaft 37 of the mold motor 27 via the speed reduction mechanism 48, rotating the rotating shaft 37 of the mold motor 27 so as to regenerate power.

## Claims

1. An electric hub device (20) comprising fixing hub shafts (24, 25), a hub body (26) rotatable with respect to the hub shafts (24, 25), and a motor (27) that rotates the hub body (26),
wherein the motor (27) is provided in the hub body (26),
the motor (27) includes a rotating body (32) provided with a rotating shaft (37) and a housing (34) accommodating the rotating body (32),
the rotating shaft (37) of the motor (27) and the hub body (26) move in synchronization with each other via a speed reduction mechanism (48) provided in the hub body (26),
the speed reduction mechanism (48) includes a sun gear (49) formed on the rotating shaft (37), an annular gear (50) provided in the hub body (26), and rotatable planetary gears (51) that mesh with the sun gear (49) and the annular gear (50),
the housing (34) has a recess (45) that is dented inward in an axial direction of the hub shafts (24, 25), and
the sun gear (49), the annular gear (50), and the planetary gears (51) are placed in the recess (45),
wherein
the electric hub device (20) further comprises a support member (52) attached to the recess (45) of the housing (34),
the planetary gears (51) are rotatably supported in the recess (45) by the housing (34) and the support member (52), and
the annular gear (50) is disposed outside the support member (52) in a radial direction, **characterized in that** the annular gear (50) is rotatably supported by the support member (52) via a bearing (56).

2. The electric hub device (20) according to claim 1, wherein the rotating body (32) includes an annular rotor (35) and a rotor holder (36) that supports the rotor (35), the housing (34) accommodates a stator (33), and the recess (45) of the housing (34) is dented into the rotor (35).

3. The electric hub device (20) according to claim 1 or 2, wherein the sun gear (49), the planetary gears (51), and the annular gear (50) are disposed on a straight line (L) in the radial direction.

4. An electric bicycle (1) comprising the electric hub device (20) according to any one of claims 1 to 3,
the electric hub device (20) being provided on a wheel (3, 4).

5. The electric bicycle (1) according to claim 4, further comprising a free wheel (15) fit onto the hub shaft (24, 25) outside one side of the hub body (26),
the free wheel (15) including a plurality of sprockets.

## Patentansprüche

1. Eine elektrische Nabenvorrichtung (20), die Befestigungsnabenwellen (24, 25), einen in Bezug zu den Nabenwellen (24, 25) drehbaren Nabenkörper (26) und einen Motor (27), der den Nabenkörper (26) dreht, umfasst,
wobei
der Motor (27) in dem Nabenkörper (26) vorgesehen ist,
der Motor (27) einen Drehkörper (32), der mit einer Drehwelle (37) ausgestattet ist, und ein Gehäuse (34), das den Drehkörper (32) beherbergt, umfasst,
sich die Drehwelle (37) des Motors (27) und der Nabenkörper (26) mittels eines Untersetzungsmechanismus' (48), der in dem Nabenkörper (26) vorgesehen ist, in Synchronisation zueinander bewegen,
der Untersetzungsmechanismus (48) ein Sonnenrad (49), das auf der Drehwelle (37) geformt ist, einen Zahnkranz (50), der in dem Nabenkörper (26) angeordnet ist, und drehbare Planetengetriebe (51), die in das Sonnenrad (49) und den Zahnkranz (50) eingreifen, umfasst,
das Gehäuse (34) eine Einbuchtung (45) hat, die in einer axialen Richtung der Nabenwellen (24, 25) nach innen eingebogen ist und
das Sonnenrad (49), der Zahnkranz (50) und die Planetengetriebe (51) in der Einbuchtung (45) angeordnet sind,
wobei die elektrische Nabenvorrichtung (20) weiter ein Stützelement (52) umfasst, das an der Einbuchtung (45) des Gehäuses (34) angebracht ist,
die Planetengetriebe (51) durch das Gehäuse (34) und das Stützelement (52) in der Einbuchtung (45) drehbar gelagert sind und
der Zahnkranz (50) außerhalb des Stützelements (52) in radialer Richtung angeordnet ist, **dadurch gekennzeichnet, dass**
der Zahnkranz (50) durch das Stützelement (52) mittels einer Lagerung (56) drehbar gelagert ist.

2. Die elektrische Nabenvorrichtung (20) gemäß Anspruch 1, wobei der Drehkörper (32) einen kranzförmigen Rotor (35) und einen Rotorhalter (36) umfasst, der den Rotor (35) unterstützt, das Gehäuse (34) einen Stator (33) beherbergt und die Einbuchtung (45) des Gehäuses (34) in den Rotor (35) eingebogen ist.

3. Die elektrische Nabenvorrichtung (20) gemäß Anspruch 1 oder 2, wobei das Sonnenrad (49), die Planetengetriebe (51) und der Zahnkranz (50) in einer geraden Linie (L) in der radialen Richtung angeordnet sind.

4. Ein elektrisches Fahrrad (1), das die elektrische Nabenvorrichtung (20) gemäß einem der Ansprüche 1 bis 3 umfasst, wobei die elektrische Nabenvorrichtung (20) mit einem Rad (3, 4) ausgestattet ist.

5. Das elektrische Fahrrad (1) gemäß Anspruch 4, das weiter ein freies Rad (15) umfasst, das auf die Nabenwelle (24, 25) außerhalb einer Seite des Nabenkörpers (26) angebracht ist, wobei das freie Rad (15) eine Vielzahl von Ritzeln umfasst.

## Revendications

1. Dispositif de moyeu électrique (20) comprenant des axes de moyeu de fixation (24, 25), un corps de moyeu (26) qui tourne par rapport aux axes de moyeu (24, 25), et un moteur (27) qui fait tourner le corps de moyeu (26), dans lequel
le moteur (27) est pourvu dans le corps de moyeu (26),
le moteur (27) inclut un corps rotatif (32) pourvu d'un axe rotatif (37) et d'un boîtier (34) dans lequel est logé le corps rotatif (32),
l'axe rotatif (37) du moteur (27) et le corps de moyeu (26) se meuvent de manière synchronisée via un mécanisme de réduction de vitesse (48) pourvu dans le corps de moyeu (26),
le mécanisme de réduction de vitesse (48) inclut un engrenage solaire (49) formé sur l'axe rotatif (37), un engrenage annulaire (50) pourvu dans le corps de moyeu (26), et des engrenages planétaires rotatifs (51) qui s'engrènent avec l'engrenage solaire (49) et l'engrenage annulaire (50),
le boîtier (34) comporte un renfoncement (45) qui est bosselé vers l'intérieur en direction axiale des axes de moyeu (24, 25), et
l'engrenage solaire (49), l'engrenage annulaire (50) et les engrenages planétaires (51) sont placés dans le renfoncement (45),
dans lequel le dispositif de moyeu électrique (20) comprend en outre un élément de support (52) attaché au renfoncement (45) du boîtier (34),
les engrenages planétaires (51) sont supportés de manière rotative dans le renfoncement (45) par le boîtier (34) et l'élément de support (52), et
l'engrenage annulaire (50) est disposé à l'extérieur de l'élément de support (52) en direction radiale,
**caractérisé en ce que** l'engrenage annulaire (50) est supporté de manière rotative par l'élément de support (52) via un palier (56).

2. Dispositif de moyeu électrique (20) selon la revendication 1, dans lequel le corps rotatif (32) inclut un rotor annulaire (35) et un support de rotor (36) qui supporte le rotor (35), le boîtier (34) loge un stator (33), et le renfoncement (45) du boîtier (34) est bosselé dans le rotor (35).

3. Dispositif de moyeu électrique (20) selon la revendication 1 ou 2, dans lequel l'engrenage solaire (49), les engrenages planétaires (51) et l'engrenage annulaire (50) sont disposés sur une ligne droite (L) en direction radiale.

4. Vélo électrique (1) comprenant le dispositif de moyeu électrique (20) selon l'une quelconque des revendications 1 à 3,
le dispositif de moyeu électrique (20) étant pourvu sur une roue (3, 4).

5. Vélo électrique (1) selon la revendication 4, comprenant en outre une roue libre (15) montée sur l'axe du moyeu (24, 25) à l'extérieur d'un côté du corps de moyeu (26),
la roue libre (15) incluant une pluralité de pignons.
